# EUROPEAN PATENT SPECIFICATION

(11) **EP 3 220 548 B1**
(45) Date of publication and mention of the grant of the patent: **12.12.2018**
(21) Application number: 16161051.4
(22) Date of filing: 18.03.2016
(51) Int. Cl.: H04B 1/38, H01Q 1/42

(54) **ANTENNA HOUSING WITH TENSION ELEMENT**
ANTENNENGEHÄUSE MIT SPANNUNGSELEMENT
BOÎTIER D'ANTENNE AVEC ÉLÉMENT DE TENSION

(43) Date of publication of application: 20.09.2017
(73) Proprietor: Huawei Technologies Co., Ltd., Longgang District Shenzhen, Guangdong 518129 (CN)
(72) Inventor: ÖLMEZ, Tekin, 80992 Munich (DE); OBERMAIER, Johann Baptist, 80992 Munich (DE); CHRASCINA, Paul, 80992 Munich (DE)
(74) Representative: Körber, Martin Hans

(56) References cited:
- WO-A2-98/57311
- JP-A- 2003 017 924
- US-A1- 2012 274 533
- US-A1- 2014 253 402

## Description

### TECHNICAL FIELD

The invention relates to an antenna housing for housing an antenna, especially a phased array antenna.

### BACKGROUND

Often, microwave antennas are installed on a mast or on a roof of a high building. The microwave antennas need to withstand environmental influences for at least a decade in locations all over the world. Therefore, the microwave antennas are usually covered by an antenna housing. In order not to influence the transmission characteristics of the antennas, the antenna housing is covered by a radome in the radiation direction of the antennas. Such a radome therefore usually is of a minimum thickness in order to keep radiation losses as small as possible, but at the same time stable enough to resist the weather effects at the employed location. Due to these requirements, two exemplary solutions come to mind. On the one hand, a stiff hardcover radome made of a solid material can be used. It offers maximum protection, but at the same time limits the transmission characteristic of the employed antenna due to the amount of material necessary for the radome. On the other hand, using a thin and flexible cover sheet stretched over an opening of the antenna housing is possible. Due to the low thickness of the sheet, minimal transmission losses can be achieved. Such a sheet though needs to be kept on tension in order to survive harsh weather conditions and in order to not negatively influence the transmission characteristics. This is especially a problem, since due to aging and temperature expansion, a flexible sheet can vary in elongation, and therefore the tightness varies.

The document US 2014/0253402 A1 shows an enclosure for a parabolic dish antenna. The enclosure is of a rigid material.

The document US 2012/0274533 A1 shows an antenna with an opening, which is covered by a cover sheet. An outer edge of the cover sheet is attached to the antenna body by fastening elements. These hold the cover sheet in place but do not provide tension to the cover sheet. A number of elastic tensioners is provided, which hold the cover sheet on tension.

### SUMMARY

Accordingly, an object of the present invention is to provide an antenna housing, which is capable of housing an antenna, shielding it against weather influences, and not influence the transmission characteristic of the antenna negatively.

The object is solved by the features of claim 1 for the apparatus. The dependent claims contain further developments.

According to a first aspect of the invention, an antenna housing for an antenna is provided. The antenna housing comprises a body, which in turn comprises an opening in a main radiation direction of the antenna and a rim surrounding the opening. Moreover, the antenna housing comprises a cover sheet, arranged on the rim of the body, configured to cover the opening. Also, the antenna housing comprises a tension arrangement, configured to provide a tension to the cover sheet towards the rim of the body. The tension arrangement in turn comprises a non-elastic tension element, configured to provide the tension to the cover sheet towards the rim of the body and an elastic sealing element, configured to provide a seal between the cover sheet and the rim of the body. The non-elastic tension element comprises at least one holding element, which is configured to fixedly hold an edge of the cover sheet with regard to the rim of the body. The non-elastic tension element comprises at least one deformation element, which is configured to deform the cover sheet between the at least one holding element and the elastic sealing element, thereby providing the tension to the cover sheet. This allows for a simple construction while at the same time ensuring a constant tension.

Especially it must be noted that in a further implementation form, the holding element is an adhesive bond or a welded bond or a plurality of screws or a plurality of rivets, configured to fixedly hold the edge of the cover sheet with regard to the rim of the body. This holding element though does not provide the tension to the cover sheet, but merely fixes the cover sheet to the rim of the body.

According to an implementation form of the first implementation form of the first aspect, the cover sheet and the deformation element are configured to compress the elastic sealing element between the cover sheet and the rim of the body when the cover sheet is deformed by the deformation element. Thereby, the elasticity of the elastic sealing element upholds the tension even in case of thermal elongation or aging elongation.

According to a further implementation form of the previous implementation forms, the at least one deformation element comprises at least one deformation plate and a deformation plate positioner. The deformation plate is arranged along the rim of at least part of the body. The deformation plate positioner is configured to position the deformation plate. The deformation plate comprises a deformation rim, which is configured to contact and deform the cover sheet, when the deformation plate positioner decreases a distance between the deformation plate and the rim of the body. A constant deformation force can thereby be applied to the entire edge of the cover sheet along the entire rim of the antenna housing. Thereby, an especially controllable and homogenous stretching of the cover sheet can be achieved.

According to a first implementation form of the previous implementation form, the deformation plate positioner comprises a plurality of screws which are configured to be manually screwed into the body, thereby decreasing the distance between the deformation plate and the rim of the body. Alternatively, the deformation plate positioner comprises a plurality of rivets, which are configured to decrease the distance between the deformation plate and the rim of the body, when riveted. As a further alternative, the deformation plate positioner comprises a motor, especially a servomotor, which is configured to position the deformation plate, thereby setting the distance between the deformation plate and the rim of the body. Also by these measures, an especially accurate tensing of the cover sheet can be achieved.

According to a further implementation form of the previous implementation forms of the first aspect, the elastic sealing element comprises an elastic cylindrical or tubular element, especially an O-ring, or a sealing lip arranged around the rim of the body. By use of these standard-components an especially simple construction of the antenna housing can be achieved.

According to a first implementation form of the previous implementation form, the elastic sealing element comprises at least one spring arranged between the elastic cylindrical element or tubular element or the sealing lip and the body. The at least one spring is configured to elastically hold the elastic cylindrical element or tubular element or the sealing lip with regard to the body. By use of such a spring, the elastic distance of the elastic sealing element can be significantly increased. This increases the amount of elongation of the cover sheet, the tension element can compensate.

According to a further implementation form of the previous implementation forms or the first aspect, the cover sheet has a thickness of between 0,05 mm and 0,5 mm, preferably 0,3 mm. Additionally, or alternatively, the cover sheet has an εᵣ of < 5, preferably < 3.5. Alternatively or additionally, the cover sheet consists of a plastic film, preferably a composite plastic film. By these measures, a weather-stable cover of the antenna with low influence on the antenna characteristics can be achieved.

According to a further implementation form of the previous implementation forms or the first aspect, when the cover sheet stretches due to thermal expansion or aging expansion, the elastic sealing element is configured to hold the tension of the cover sheet over the opening by elastic deformation. Additionally, when the cover sheet contracts due to thermal shrinkage or aging shrinkage, the elastic sealing element is configured to hold the tension of the cover sheet over the opening by elastic deformation. Therefore, it is not necessary to adjust the tension of the cover sheet manually, but this is done automatically by the elastic sealing element.

According to a further implementation form of the previous implementation forms or the first aspect, the non-elastic tension element and the elastic sealing element are arranged on a side of the rim of the body, facing towards the main radiation direction of the antenna. Alternatively, the non-elastic tension element is arranged on a side of the rim of the body, facing radially outwards from the main radiation direction of the antenna. In this case, the elastic sealing element is arranged on a side of the rim of the body facing towards the main radiation direction of the antenna. Also, in this case, a deflecting element is arranged between the non-elastic tension element and the elastic sealing element, configured to guide the cover sheet around a corner of the rim of the body. In a further alternative, the non-elastic tension element and the elastic sealing element are arranged on a side of the rim of the body, facing radially outwards from the main radiation direction of the antenna. Also in this case, a deflecting element is arranged between the elastic sealing element and the opening of the body covered by the cover sheet, configured to guide the cover sheet around a corner of the rim of the body. By these three different alternatives, a great variability in construction of the antenna housing is provided. Especially circumstances regarding the dimensions of the antenna housing can be easily taken care of.

According to a further implementation form of the previous implementation forms or the first aspect, the antenna housing comprises an antenna fixture configured to fix the antenna, so that the main radiation direction of the antenna is directed towards the opening of the body. A secure housing of the antenna without influencing the transmission characteristic can thereby be achieved.

According to a second aspect of the invention, an antenna arrangement is provided. The antenna arrangement comprises a previously described antenna housing and an antenna, preferably a phased array antenna. The antenna is then arranged within the antenna housing. A secure housing and protection of the antenna without influencing the transmission characteristics of the antenna can thereby be achieved.

According to a first implementation form of the second aspect, a surface of the antenna is arranged in parallel to the cover sheet. Especially in case of phased array antennas, this parallel arrangement allows for identical transmission conditions for each element of the phased array antenna.

### BRIEF DESCRIPTION OF DRAWINGS

The present invention is in the following explained in detail in relation to embodiments of the invention in reference to the enclosed drawings, in which:
- Fig. 1a: shows a first exemplary antenna housing without a cover sheet in a three dimensional view;
- Fig. 1b: shows a second exemplary antenna housing including a cover sheet in a three dimensional view;
- Fig. 2: shows a third exemplary antenna housing including a cover sheet in a three dimensional view;
- Fig. 3: shows a fourth exemplary antenna arrangement in a cut view;
- Fig. 4: shows a rim of a fifth exemplary antenna housing in a cut view;
- Fig. 5: shows a rim and a cover sheet of a sixth exemplary antenna housing in a cut view;
- Fig. 6: shows an embodiment of the antenna housing of the first aspect of the invention in a cut view;
- Fig. 7: shows a further embodiment of the antenna housing of the first aspect of the invention in a three dimensional view;
- Figs. 8-11: show a further embodiment of the antenna housing of the first aspect of the invention in a cut view in different states of tension of the cover;
- Fig. 12-19: show a further embodiment of the antenna housing of the first aspect of the invention in a cut view

### DESCRIPTION OF EMBODIMENTS

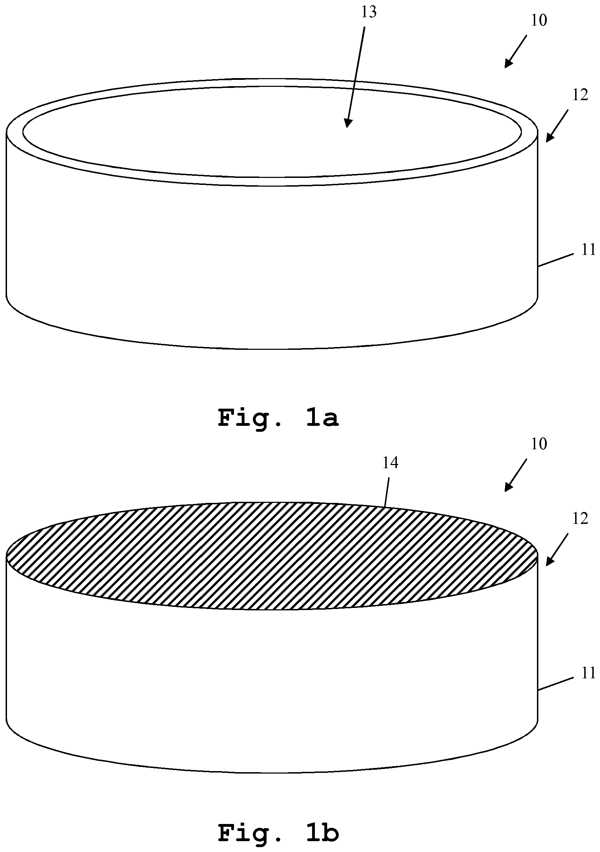

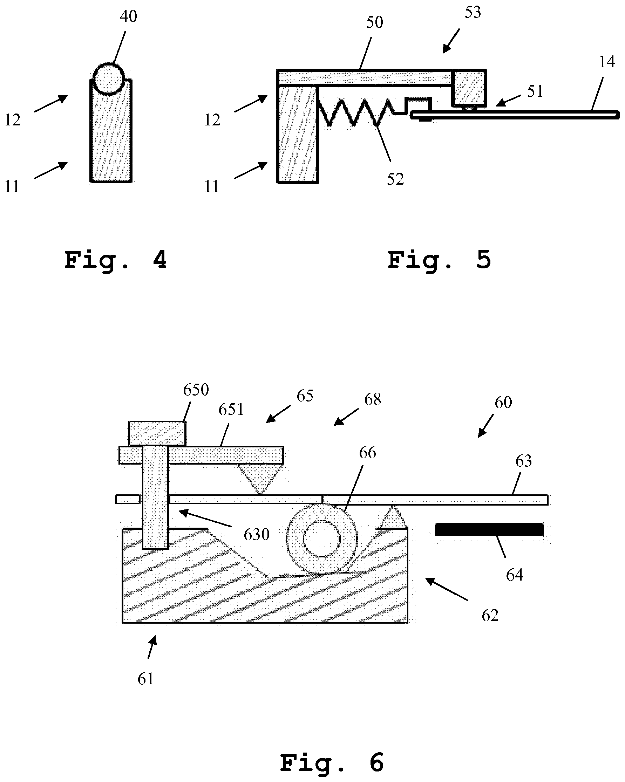

First we demonstrate the general construction of an antenna housing along Fig. 1 - 5. Along Fig. 6 - 19, different embodiments of the antenna housing according to the first aspect of the invention are shown and described in detail. Similar entities and reference numbers in different figures have been partially omitted.

In Fig. 1a, a first exemplary antenna housing 10 is shown. The antenna housing 10 comprises a body 11 and an opening 13. Moreover, the body 11 comprises a rim 12, which surrounds the opening 13. An antenna, which is not displayed here, may be inserted into the antenna housing 10 and fixed, for example by an antenna fixture. Here, the opening 13 is not covered. This is for illustrative purposes only.

In Fig. 1b, a second exemplary antenna housing 10 is shown. The antenna housing 10 depicted here corresponds to the antenna housing 10 of Fig. 1a. The opening 13 of Fig. 1a though is covered by a cover sheet 14, here. The cover sheet 14 covers an antenna fixed inside the antenna housing 10 and protects it from weather influence.

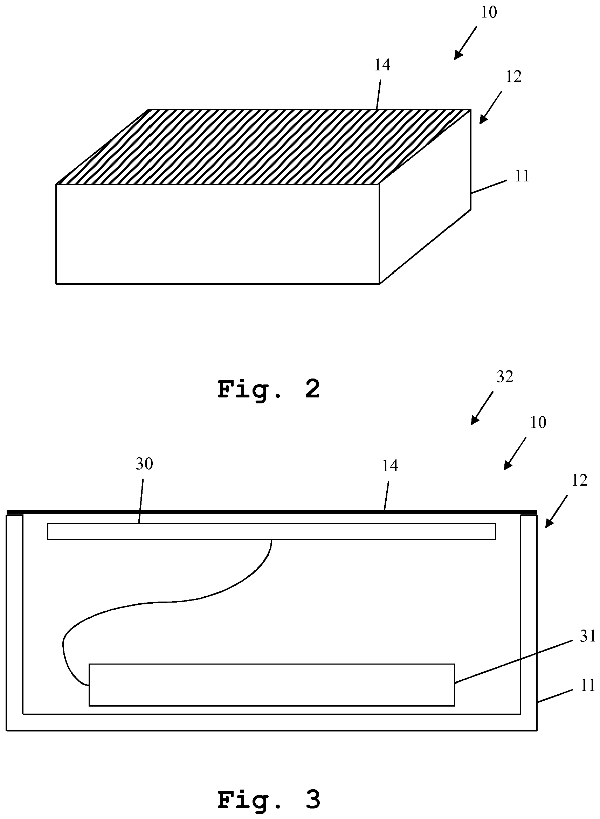

In Fig. 2, a further antenna housing 10 is shown. The only difference to the antenna housing 10 of Fig. 1a and Fig. 1b is that the antenna housing here has a rectangular shape, while the antenna housing 10 of Fig. 1a and Fig. 1b has a round or oval shape.

In Fig. 3, a further antenna housing 10 is shown in a cut view. Especially, here an antenna arrangement 32 comprising the antenna housing 10 and an antenna 30 is shown. Furthermore, the antenna arrangement 32 comprises an electronic unit 31, which is also mounted within the antenna housing 10 and connected to the antenna 30 via a cable. The antenna housing 10 is comparable to the antenna housing shown in Fig. 1a - Fig. 2.

It is easily recognizable here that the antenna 30 is mounted in parallel to the cover sheet 14. Especially if the antenna 30 is a phased array antenna, such a mounting is advantageous, since identical transmission conditions are achieved for each individual antenna element of the phased array antenna 30.

With the exemplary antenna housings 10 shown in Fig. 1a - Fig. 3, there exists the problem though, that after the cover sheet 14 has been mounted to the rim 12 of the body 11 of the antenna housing 10, aging elongation or temperature elongation of the cover sheet 14 leads to a slack of the cover sheet 14 which cannot be compensated. This leads to a reduction in stability of the antenna housing 10 and also to a degradation of the antenna performance, since no longer the parallel mounting of the cover sheet 14 and the antenna 30 can be guaranteed.

In Fig. 4, a detail of the rim 12 of the antenna housing 10 of Fig. 1a - Fig. 3 is depicted. Here, a sealing element 40 is arranged on the rim 12. For illustrative purposes, the cover sheet 14 is not depicted here. It would be arranged in contact with the sealing element 40. Also when using this construction, there is no way of compensating for aging elongation or thermal elongation of the cover sheet 14.

Moreover, in Fig. 5, a tension arrangement 53 is displayed. The tension arrangement 53 is mounted to the rim 12 of the body 11 of the antenna housing 10. The tension arrangement 53 comprises a spring 52, which is connected to the rim 12 of the body 11 of the antenna housing 10 and to an edge of the cover sheet 14. The tension arrangement 53 moreover comprises a sealing lever 50, which is also connected to the rim 12, which has a sealing element 51 in contact with the cover sheet 14. The spring 52 tenses the cover sheet 14 towards the rim 12 of the body 11 of the antenna housing 10. In the exemplary depiction here, only a small section is shown in a cut view. In reality, such an arrangement would surround the entire cover sheet 14 circumferentially, having springs 52 evenly spaced.

Although the exemplary antenna housing shown in Fig. 5 is advantageous over a regular antenna housing, which does not have the spring 52, but is still disadvantageous, since the construction is very complicated. Also the arrangement of the sealing element 51 leads to problems regarding an environmental seal.

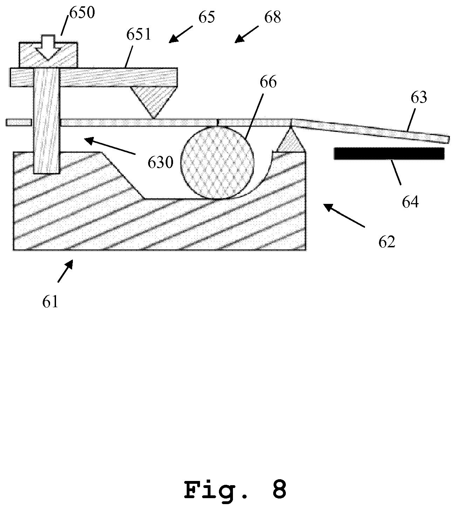

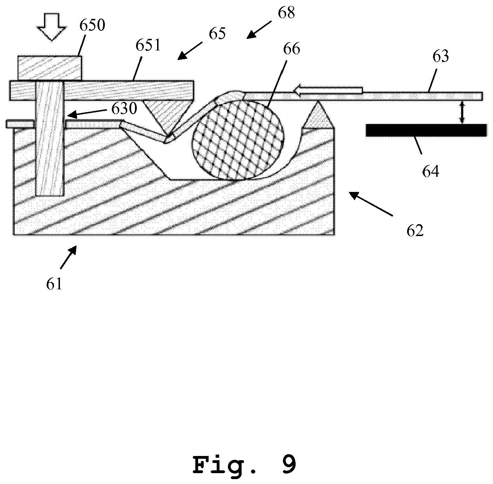

In Fig. 6, a first embodiment of the antenna housing of the present invention is depicted. The antenna housing 60 comprises a body 61 which comprises a rim 62. In contact with the body 61, is a cover sheet 63, which covers an antenna 64 which is not part of the antenna housing 60 but is arranged inside it. Cover sheet 63 is provided with tension towards the rim 62 of the body 61 by a tension arrangement 68. The tension arrangement 68 comprises a non-elastic tension element 65 and an elastic sealing element 66. The non-elastic tension element 65 provides the tension to the cover sheet 63 towards the rim 62 of the body 61. The elastic sealing element 66 provides a seal between the cover sheet 63 and the rim 62 of the body 61. Especially, the non-elastic tension element 65 comprises a screw 650, which holds the cover sheet 63 in place by extending through a hole 630 of the cover sheet 63 and being mounted within the rim 62 of the body 61. The non-elastic tension element 65 moreover comprises a deformation plate 651, which is arranged to deform the cover sheet 63, when the screw 650 is screwed into the rim 62 of the body 61. When the deformation plate 651 deforms the cover sheet 63 towards the rim 62 of the body 61, the cover sheet 63 is stretched over the elastic sealing element 66 deforming the elastic sealing element 66 and thereby generating tension on the cover sheet 63. Such a deforming process is shown in Fig. 8 and Fig. 9.

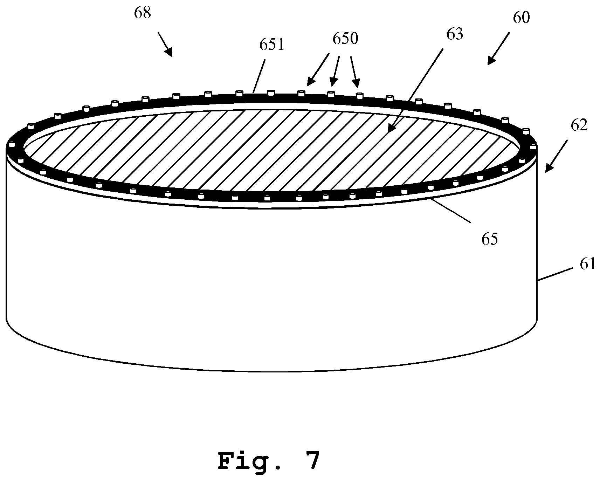

In Fig. 7, a second embodiment of the antenna housing 60 of Fig. 6 is depicted. Here, the deformation plate 651 and the screws 650 described along Fig. 6 can readily be seen. It is also obvious here that the tension element 65 circumferentially surrounds the entire rim 62 of the body 61 of the antenna housing 60 and provides tension to the cover sheet 63 unidirectionally. Also, in Fig. 7, the antenna arrangement 69 comprising the antenna housing 60 and an antenna is marked.

In Fig. 8 - Fig. 11, a tensing process and an elongation process are described. The construction is similar to the construction of Fig. 6 and Fig. 7. A repetition of the description of the construction is skipped here.

In Fig. 8, a non-tensed cover sheet 63 before screwing the screw 650 into the rim 62 of the body 61 is shown. It can clearly be seen that the cover sheet 63 and the antenna 64 are not arranged in parallel. Also it can clearly be seen that the elastic sealing element 66 is not compressed. Now the screw 650 is screwed into the rim 62 of the body 61 as illustrated by the arrow at the top of the screw 650. The result is shown in Fig. 9. Here, the screw 650 has entered significantly into the rim 62 of the body 61, decreasing the distance of the deformation plate 651 from the rim 62. Thereby, the deformation plate 651 has deformed the cover sheet 63 and thereby tensed the cover sheet 63 so that the cover sheet 63 and the antenna 64 are now arranged in parallel.

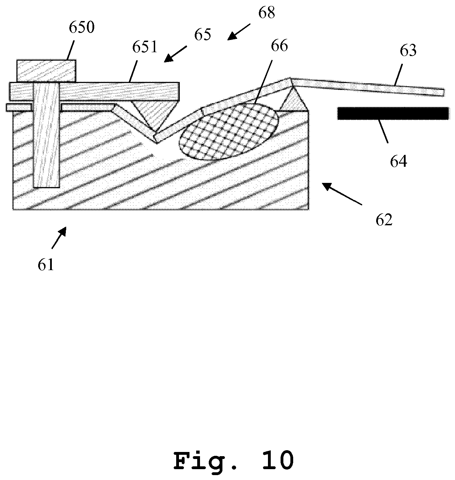

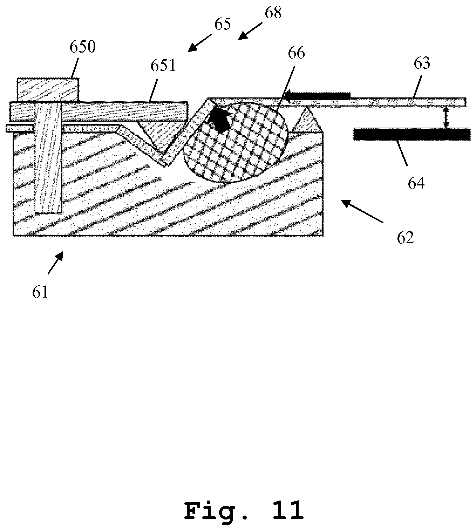

In Fig. 10, the situation after an elongation, for example thermal elongation or aging elongation of the cover sheet 63 is depicted. Here, the deformation plate 651 has already deformed the cover sheet 63 towards the rim 62. Still, the cover sheet 63 is not significantly tensed over the antenna 64 resulting in a sub-optimal slack of the cover sheet 63. If the situation occurs though, the elastic sealing element 66 automatically expands and thereby tenses the cover sheet 63 over the opening. Therefore, the situation depicted in Fig. 10 does not exist in practice, since the slack of the cover sheet 63 is immediately removed by the elastic behavior of the elastic sealing element 66. The resulting situation is shown in Fig. 11. The elastic sealing element 66 has expanded, making sure that the cover sheet 63 is again tense over the opening resulting in a parallel arrangement of the cover sheet 63 and the antenna 64.

Instead of using a screw 650 or a plurality of screws 650 as shown in Fig. 7, as deformation plate positioner, also rivets can be used. Also, the cover sheet 63 can be welded or soldered or glued to the rim 62 of the body 61 instead of attaching it by a screw 650.

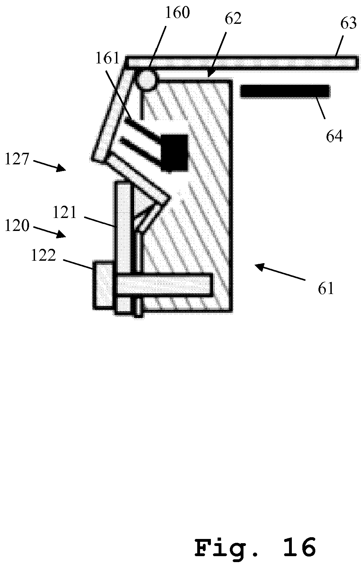

The elastic sealing element 66 is an elastic cylindrical or tubular element, surrounding the rim 62 of the body 61 of the antenna housing 60 circumferentially. Especially, the elastic sealing element 66 is an O-ring (for example a solid O-Ring as in Fig. 8-12 or a hollow O-Ring as in Fig. 6). Instead, also a sealing lip can be used. This is shown in Fig. 16, Fig. 17, Fig. 18 and Fig. 19.

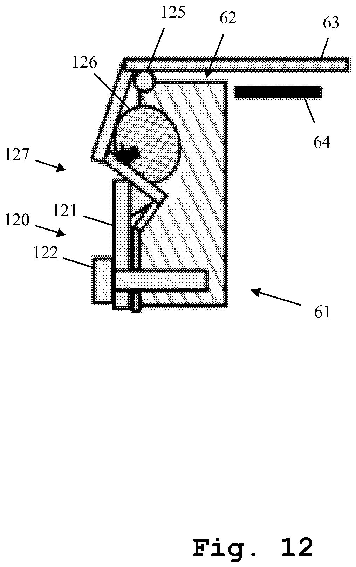

In Fig. 12 - Fig. 19 alternative embodiments of the first aspect of the invention are shown.

In Fig. 12, the tension arrangement 127 is arranged on an outside of the rim 62 of the body 61 facing outwardly from the opening of the antenna housing 60. Here, the deformation element 120 comprises a deformation plate 121 and a plurality of screws 122. The tension arrangement 127 is arranged so that the cover sheet 63 is stretched over a deflection element 125, which guides the cover sheet 63 around a corner of the rim 62 of the body 61.

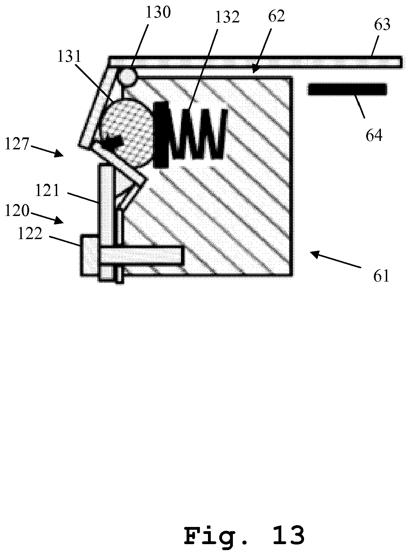

In Fig. 13, the elastic sealing element 131 furthermore comprises a spring 132, which holds the elastic tubular or cylindrical sealing element. The spring 132 increases the elasticity of the elastic sealing element 131 allowing for a compensation of greater slack of the cover sheet 63.

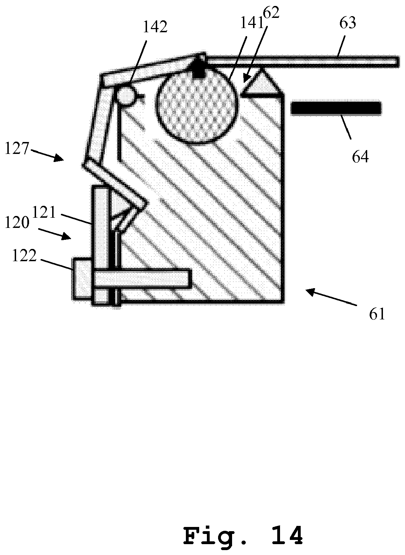

In Fig. 14, a further alternative embodiment is shown. Here, the elastic sealing element 141 is arranged on a side of the rim 62 facing into the main radiation direction of the antenna. The deforming element 127 though is arranged on a circumferentially outward-facing side of the rim. Again, the cover sheet 63 is stretched over a corner of the rim 62 by a deflection element 142.

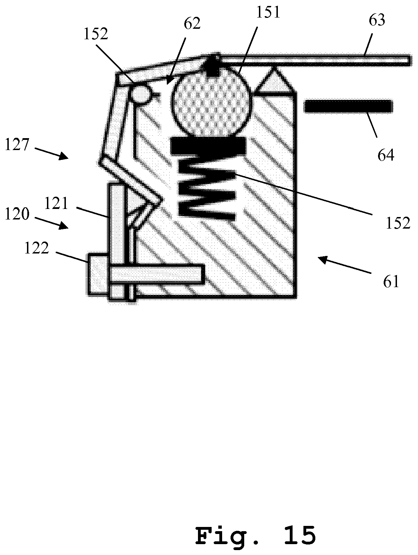

In Fig. 15, a further embodiment of the antenna housing is shown. This arrangement is similar to the arrangement of Fig. 14, except that here the elastic sealing element 151 comprises a spring 152, which increases the elastic distance and thereby increases the amount of slack the tension arrangement can compensate.

In Fig. 16, a further embodiment of the antenna housing of the first aspect of the invention is shown. Here, the elastic sealing element 161 is no longer a tubular or cylindrical sealing element but a sealing lip 161. Here, it is a double sealing lip. Also here, the entire tension arrangement 127 is arranged on a circumferentially outward-facing side of the rim 62 of the body 61, and the cover sheet is guided around the corner of the rim by a deflection element 160.

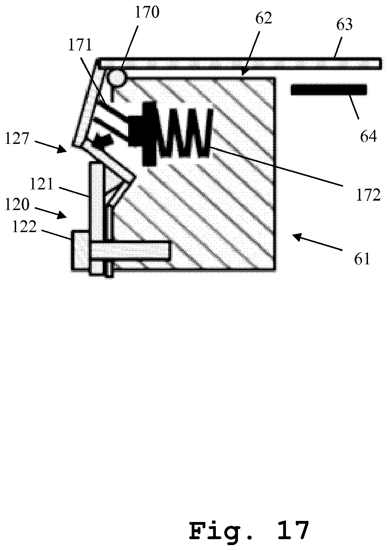

In Fig. 17 a further embodiment of the first aspect of the invention is shown. Here, the elastic sealing element 161 additionally comprises a spring 162 which further increases the elastic distance and thereby the amount of slack of the cover sheet 63, the tension arrangement can compensate. Also here, the cover sheet 63 is guided around a corner of the rim 62 by use of a deflection element 170.

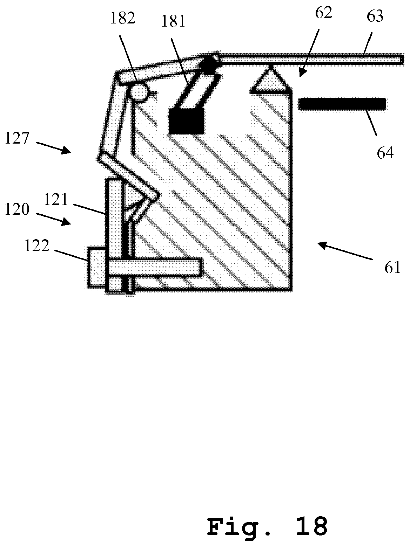

In Fig. 18, a further embodiment of the first aspect of the invention is shown. Here, the elastic sealing element 181 again is a sealing lip, which is arranged on a side of the rim 62 of the body 61 facing into the main radiation direction of the antenna 64. The deformation element 127 though is arranged on a circumferentially outward-facing side of the rim 62. The cover sheet 63 is again guided around a corner of the rim 62 by use of a deflection element 182.

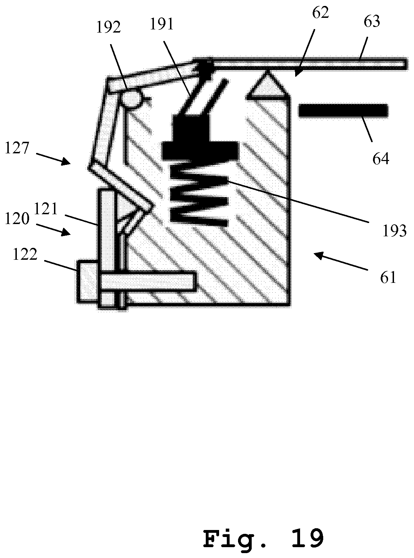

Moreover, in Fig. 19, a further embodiment of the first aspect of the invention is shown. This arrangement is similar to the arrangement of Fig. 18, except that the elastic sealing element 191 additionally comprises a spring 193 increasing the elastic distance and thereby the amount of slack of the cover sheet 63, which can be compensated for. Also here, the cover sheet 63 is guided around a corner of the rim 62 by use of a deflection element 192.

The invention is not limited to the examples and especially not to circular or rectangular antennas as depicted. Also there is no limitation to phased array antennas. The characteristics of the exemplary embodiments can be used in any advantageous combination.

The invention has been described in conjunction with various embodiments herein. However, other variations to the disclosed embodiments can be understood and effected by those skilled in the art in practicing the claimed invention, from a study of the drawings, the disclosure and the appended claims. In the claims, the word "comprising " does not exclude other elements or steps and the indefinite article "a" or "an" does not exclude a plurality. A single processor or other unit may fulfill the functions of several items recited in the claims. The mere fact that certain measures are recited in usually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the internet or other wired or wireless communication systems.

## Claims

1. An antenna housing (60) for an antenna (64), the antenna housing (60) comprising:
- a body (61), comprising
- an opening in a main radiation direction of the antenna, and
- a rim (62) surrounding the opening,
- a cover sheet (63), arranged on the rim (62) of the body (61), configured to cover the opening, and
- a tension arrangement (68, 127), configured to provide tension to the cover sheet (63) towards the rim (62) of the body (61),
wherein the tension arrangement (68, 127) comprises:
- a non-elastic tension element (65, 120), configured to provide the tension to the cover sheet (63) towards the rim (62) of the body (61), and
- an elastic sealing element (66, 126, 131, 141, 151, 161, 171, 181, 191), configured to provide a seal between the cover sheet (63) and the rim (62) of the body (61),
wherein the non-elastic tension element (65, 120) comprises at least one holding element (122, 650), configured to fixedly hold an edge of the cover sheet (63) with regard to the rim (62) of the body (61), and
wherein the non-elastic tension element (65, 120) comprises at least one deformation element (121, 651), configured to deform the cover sheet (63) between the at least one holding element (122, 650) and the elastic sealing element (66, 126, 131, 141, 151, 161, 171, 181, 191), thereby providing the tension to the cover sheet (63).

2. The antenna housing (60) according to claim 1,
wherein the cover sheet (63) and the deformation element (121, 651) are configured to compress the elastic sealing element (66, 126, 131, 141, 151, 161, 171, 181, 191) between the cover sheet (63) and the rim (62) of the body (61), when the cover sheet (63) is deformed by the deformation element (121, 651).

3. The antenna housing (60) according to claim 1 or 2,
wherein the at least one deformation element (121, 651) comprises at least one deformation plate (121, 651) and a deformation plate positioner (122, 650),
wherein the deformation plate (121, 651) is arranged along the rim (62) of at least part of the body (61),
wherein the deformation plate positioner (122, 650) is configured to position the deformation plate (122, 651),
wherein the deformation plate (121, 651) comprises a deformation rim, configured to contact and deform the cover sheet (63), when the deformation plate positioner (122, 350) decreases a distance between the deformation plate and the rim (62) of the body (61).

4. The antenna housing (60) according to claim 3,
wherein the deformation plate positioner (122, 651) comprises a plurality of screws (122, 651), which are configured to be manually screwed into the body (61), thereby decreasing the distance between the deformation plate and the rim (62) of the body (61), or
wherein the deformation plate positioner comprises a plurality of rivets, which are configured to decrease the distance between the deformation plate and the rim (62) of the body (61) when riveted, or
wherein the deformation plate positioner comprises a motor, especially a servomotor, which is configured to position the deformation plate, thereby setting the distance between the deformation plate and the rim (62) of the body (61).

5. The antenna housing (60) according to any of the claims 1 to 4,
wherein the elastic sealing element (66, 126, 131, 141, 151, 161, 171, 181, 191) comprises an elastic cylindrical (66, 126, 131, 141, 151) or tubular element, especially an O-Ring, or a sealing lip (161, 171, 181, 191) arranged around the rim (62) of the body (61).

6. The antenna housing (60) according to claim 5,
wherein the elastic sealing element (66, 126, 131, 141, 151, 161, 171, 181, 191) comprises at least one spring (132, 152, 172, 193) arranged between the elastic cylindrical element (131, 151) or tubular element or the sealing lip (171, 191) and the body (61), and
wherein the at least one spring (132, 152, 172, 193) is configured to elastically hold the elastic cylindrical element (131, 151) or tubular element or the sealing lip (171, 191) with regard to the body (61).

7. The antenna housing (60) according to any of the claims 1 to 6,
wherein the cover sheet (63) has a thickness of between 0,05mm and 0,5mm, preferably 0,3mm, and/or
wherein the cover sheet (63) has an εᵣ of below 5, preferably below 3,5, and/or
wherein the cover sheet (63) consists of a plastic film, preferably a composite plastic film.

8. The antenna housing (60) according to any of the claims 1 to 7,
wherein, when the cover sheet (63) stretches due to thermal expansion or aging expansion, the elastic sealing element (66, 126, 131, 141, 151, 161, 171, 181, 191) is configured to hold the tension of the cover sheet (63) over the opening by elastic deformation, and
wherein, when the cover sheet (63) contracts due to thermal shrinkage or aging shrinkage, the elastic sealing element (66, 126, 131, 141, 151, 161, 171, 181, 191) is configured to hold the tension of the cover sheet (63) over the opening by elastic deformation.

9. The antenna housing (60) according to any of the claims 1 to 8,
wherein the non-elastic tension element (65, 120) and the elastic sealing element (66, 126, 131, 141, 151, 161, 171, 181, 191) are arranged on a side of the rim (62) of the body (61), facing towards the main radiation direction of the antenna.

10. The antenna housing (60) according to any of the claims 1 to 8,
wherein the non-elastic tension element (65, 120) is arranged on a side of the rim (62) of the body (61), facing radially outwards from the main radiation direction of the antenna,
wherein the elastic sealing element (66, 126, 131, 141, 151, 161, 171, 181, 191) is arranged on a side of the rim (62) of the body (61), facing towards the main radiation direction of the antenna, and
wherein a deflecting element (142, 152) is arranged between the non-elastic tension element (65, 120) and the elastic sealing element (66, 126, 131, 141, 151, 161, 171, 181, 191), configured to guide the cover sheet (63) around a corner of the rim (62) of the body (61).

11. The antenna housing (60) according to any of the claims 1 to 8,
wherein the non-elastic tension element (65, 120) and the elastic sealing element (66, 126, 131, 141, 151, 161, 171, 181, 191) are arranged on a side of the rim (62) of the body (61), facing radially outwards from the main radiation direction of the antenna, and
wherein a deflecting element (160, 170, 182, 192) is arranged between the elastic sealing element (66, 126, 131, 141, 151, 161, 171, 181, 191) and the opening of the body (61) covered by the cover sheet (63), configured to guide the cover sheet (63) around a corner of the rim (62) of the body (61).

12. The antenna housing (60) according to any of the claims 1 to 11,
wherein the antenna housing (60) comprises an antenna fixture configured to fix the antenna, so that the main radiation direction of the antenna is directed towards the opening of the body (61).

13. An antenna arrangement 69 comprising an antenna housing (60) according to any of the claims 1 to 12, and an antenna, preferably a phased array antenna,
wherein the antenna is arranged within the antenna housing (60).

14. The antenna arrangement 69 according to claim 13,
wherein a surface of the antenna is arranged in parallel to the cover sheet (63).

## Patentansprüche

1. Antennengehäuse (60) für eine Antenne (64), das Antennengehäuse (60) umfassend:
- einen Körper (61), umfassend
- eine Öffnung in einer Hauptstrahlungsrichtung der Antenne, und
- einen die Öffnung umgebenden Rand (62),
- eine am Rand (62) des Körpers (61) angeordnete Abdeckplatte (63), die dazu ausgelegt ist, die Öffnung abzudecken, und
- eine Spannanordnung (68, 127), die dazu ausgelegt ist, für die Abdeckplatte (63) Spannung in Richtung des Rands (62) des Körpers (61) bereitzustellen,
wobei die Spannanordnung (68, 127) Folgendes umfasst:
- ein nichtelastisches Spannelement (65, 120), das dazu ausgelegt ist, die Spannung für die Abdeckplatte (63) in Richtung des Rands (62) des Körpers (61) bereitzustellen, und
- ein elastisches Dichtelement (66, 126, 131, 141, 151, 161, 171, 181, 191), das dazu ausgelegt ist, eine Dichtung zwischen der Abdeckplatte (63) und dem Rand (62) des Körpers (61) bereitzustellen,
wobei das nichtelastische Spannelement (65, 120) zumindest ein Halteelement (122, 650) umfasst, das dazu ausgelegt ist, eine Kante der Abdeckplatte (63) in Bezug auf den Rand (62) des Körpers (61) fest zu halten, und
wobei das nichtelastische Spannelement (65, 120) zumindest ein Verformungselement (121, 651) umfasst, das dazu ausgelegt ist, die Abdeckplatte (63) zwischen dem zumindest einen Halteelement (122, 650) und dem elastischen Dichtelement (66, 126, 131, 141, 151, 161, 171, 181, 191) zu verformen, wodurch die Spannung für die Abdeckplatte (63) bereitgestellt wird.

2. Antennengehäuse (60) nach Anspruch 1,
wobei die Abdeckplatte (63) und das Verformungselement (121, 651) dazu ausgelegt sind, das elastische Dichtelement (66, 126, 131, 141, 151, 161, 171, 181, 191) zwischen der Abdeckplatte (63) und dem Rand (62) des Körpers (61) zusammenzudrücken, wenn die Abdeckplatte (63) durch das Verformungselement (121, 651) verformt wird.

3. Antennengehäuse (60) nach Anspruch 1 oder 2,
wobei das zumindest eine Verformungselement (121, 651) zumindest eine Verformungsplatte (121, 651) und einen Verformungsplatten-"Positioner" (122, 650) umfasst,
wobei die Verformungsplatte (121, 651) entlang des Rands (62) von zumindest einem Teil des Körpers (61) angeordnet ist,
wobei der Verformungsplatten-"Positioner" (122, 650) dazu ausgelegt ist, die Verformungsplatte (122, 651) zu positionieren,
wobei die Verformungsplatte (121, 651) einen Verformungsrand umfasst, der dazu ausgelegt ist, mit der Abdeckplatte (63) in Kontakt zu treten und diese zu verformen, wenn der Verformungsplatten-"Positioner" (122, 350) einen Abstand zwischen der Verformungsplatte und dem Rand (62) des Körpers (61) verringert.

4. Antennengehäuse (60) nach Anspruch 3,
wobei der Verformungsplatten-"Positioner" (122, 651) eine Vielzahl von Schrauben (122, 651) umfasst, die dazu ausgelegt sind, manuell in den Körper (61) geschraubt zu werden, wodurch der Abstand zwischen der Verformungsplatte und dem Rand (62) des Körpers (61) verringert wird, oder
wobei der Verformungsplatten-"Positioner" eine Vielzahl von Nieten umfasst, die dazu ausgelegt sind, den Abstand zwischen der Verformungsplatte und dem Rand (62) des Körpers (61) zu verringern, wenn sie vernietet sind, oder
wobei der Verformungsplatten-"Positioner" einen Motor, insbesondere einen Servomotor, umfasst, der dazu ausgelegt ist, die Verformungsplatte zu positionieren, wodurch der Abstand zwischen der Verformungsplatte und dem Rand (62) des Körpers (61) festgelegt wird.

5. Antennengehäuse (60) nach einem der Ansprüche 1 bis 4,
wobei das elastische Dichtelement (66, 126, 131, 141, 151, 161, 171, 181, 191) ein elastisches zylindrisches (66, 126, 131, 141, 151) oder röhrenförmiges Element, insbesondere einen O-Ring, oder eine Dichtlippe (161, 171, 181, 191), das bzw. die um den Rand (62) des Körpers (61) angeordnet ist, umfasst.

6. Antennengehäuse (60) nach Anspruch 5,
wobei das elastische Dichtelement (66, 126, 131, 141, 151, 161, 171, 181, 191) zumindest eine Feder (132, 152, 172, 193) umfasst, die zwischen dem elastischen zylindrischen Element (131, 151) oder dem röhrenförmigen Element oder der Dichtlippe (171, 191) und dem Körper (61) angeordnet ist, und
wobei die zumindest eine Feder (132, 152, 172, 193) dazu ausgelegt ist, das elastische zylindrische Element (131, 151) oder das röhrenförmige Element oder die Dichtlippe (171, 191) in Bezug auf den Körper (61) elastisch zu halten.

7. Antennengehäuse (60) nach einem der Ansprüche 1 bis 6,
wobei die Abdeckplatte (63) eine Dicke von zwischen 0,05 mm und 0,5 mm, vorzugsweise 0,3 mm, aufweist, und/oder
wobei die Abdeckplatte (63) eine εᵣ von unter 5, vorzugsweise unter 3,5, aufweist, und/oder
wobei die Abdeckplatte (63) aus einer Kunststofffolie, vorzugsweise einer Verbundkunststofffolie, besteht.

8. Antennengehäuse (60) nach einem der Ansprüche 1 bis 7,
wobei, wenn sich die Abdeckplatte (63) aufgrund von Wärmedehnung oder Alterungsdehnung ausdehnt, das elastische Dichtelement (66, 126, 131, 141, 151, 161, 171, 181, 191) dazu ausgelegt ist, die Spannung der Abdeckplatte (63) über der Öffnung durch elastische Verformung zu halten, und
wobei, wenn sich die Abdeckplatte (63) aufgrund von thermischer Schrumpfung oder Alterungsschrumpfung zusammenzieht, das elastische Dichtelement (66, 126, 131, 141, 151, 161, 171, 181, 191) dazu ausgelegt ist, die Spannung der Abdeckplatte (63) über der Öffnung durch elastische Verformung zu halten.

9. Antennengehäuse (60) nach einem der Ansprüche 1 bis 8,
wobei das nichtelastische Spannelement (65, 120) und das elastische Dichtelement (66, 126, 131, 141, 151, 161, 171, 181, 191) an einer Seite des Rands (62) des Körpers (61), der Hauptstrahlungsrichtung der Antenne zugewandt, angeordnet sind.

10. Antennengehäuse (60) nach einem der Ansprüche 1 bis 8,
wobei das nichtelastische Spannelement (65, 120) an einer Seite des Rands (62) des Körpers (61), radial nach außen von der Hauptstrahlungsrichtung der Antenne weg weisend, angeordnet ist,
wobei das Dichtelement (66, 126, 131, 141, 151, 161, 171, 181, 191) an einer Seite des Rands (62) des Körpers (61), der Hauptstrahlungsrichtung der Antenne zugewandt, angeordnet ist, und
wobei ein Umlenkelement (142, 152) zwischen dem nichtelastischen Spannelement (65, 120) und dem elastischen Dichtelement (66, 126, 131, 141, 151, 161, 171, 181, 191) angeordnet ist, das dazu ausgelegt ist, die Abdeckplatte (63) um eine Ecke des Rands (62) des Körpers (61) zu führen.

11. Antennengehäuse (60) nach einem der Ansprüche 1 bis 8,
wobei das nichtelastische Spannelement (65, 120) und das elastische Dichtelement (66, 126, 131, 141, 151, 161, 171, 181, 191) an einer Seite des Rands (62) des Körpers (61), radial nach außen von der Hauptstrahlungsrichtung der Antenne weg weisend, angeordnet sind, und
wobei ein Umlenkelement (160, 170, 182, 192) zwischen dem elastischen Dichtelement (66, 126, 131, 141, 151, 161, 171, 181, 191) und der durch die Abdeckplatte (63) abgedeckten Öffnung des Körpers (61) angeordnet ist, das dazu ausgelegt ist, die Abdeckplatte (63) um eine Ecke des Rands (62) des Körpers (61) zu führen.

12. Antennengehäuse (60) nach einem der Ansprüche 1 bis 11,
wobei das Antennengehäuse (60) eine Antennenbefestigung umfasst, die dazu ausgelegt ist, die Antenne zu befestigen, sodass die Hauptstrahlungsrichtung der Antenne in Richtung der Öffnung des Körpers (61) gerichtet ist.

13. Antennenanordnung 69, umfassend ein Antennengehäuse (60) nach einem der Ansprüche 1 bis 12, und eine Antenne, vorzugsweise eine Phased-Array-Antenne,
wobei die Antenne innerhalb des Antennengehäuses (60) angeordnet ist.

14. Antennenanordnung 69 nach Anspruch 13,
wobei eine Oberfläche der Antenne parallel zu der Abdeckplatte (63) angeordnet ist.

## Revendications

1. Boîtier d'antenne (60) pour une antenne (64), le boîtier d'antenne (60) comprenant :
un corps (61), comprenant :
une ouverture dans une direction de rayonnement principale de l'antenne, et une périphérie (62) entourant l'ouverture ;
une feuille de couverture (63), disposée sur la périphérie (62) du corps (61), conçue pour couvrir l'ouverture ; et
un dispositif de tension (68, 127), conçu pour exercer une tension sur la feuille de couverture (63) vers la périphérie (62) du corps (61),
le dispositif de tension (68, 127) comprenant :
un élément de tension non élastique (65, 120), conçu pour exercer la tension sur la feuille de couverture (63) vers la périphérie (62) du corps (61) ; et
un élément d'étanchéité élastique (66, 126, 131, 141, 151, 161, 171, 181, 191), conçu pour assurer une étanchéité entre la feuille de couverture (63) et la périphérie (62) du corps (61),
l'élément de tension non élastique (65, 120) comprenant au moins un élément de support (122, 650), conçu pour supporter fixe un bord de la feuille de couverture (63) par rapport à la périphérie (62) du corps (61), et
l'élément de tension non élastique (65, 120) comprenant au moins un élément de déformation (121, 651), conçu pour déformer la feuille de couverture (63) entre l'au moins un élément de support (122, 650) et l'élément d'étanchéité élastique (66, 126, 131, 141, 151, 161, 171, 181, 191), de manière à assurer la tension de la feuille de couverture (63).

2. Boîtier d'antenne (60) selon la revendication 1,
dans lequel la feuille de couverture (63) et l'élément de déformation (121, 651) sont conçus pour comprimer l'élément d'étanchéité élastique (66, 126, 131, 141, 151, 161, 171, 181, 191) entre la feuille de couverture (63) et la périphérie (62) du corps (61), quand la feuille de couverture (63) est déformée par l'élément de déformation (121, 651).

3. Boîtier d'antenne (60) selon la revendication 1 ou 2,
dans lequel l'au moins un élément de déformation (121, 651) comprend au moins une plaque de déformation (121, 651) et un positionneur de plaque de déformation (122, 650),
dans lequel la plaque de déformation (121, 651) est disposée le long de la périphérie (62) d'au moins une partie du corps (61),
dans lequel le positionneur de plaque de déformation (122, 650) est conçu pour positionner la plaque de déformation (122, 651),
dans lequel la plaque de déformation (121, 651) comprend une périphérie de déformation, conçue pour entrer en contact avec la feuille de couverture (63) et la déformer quand le positionneur de plaque de déformation (122, 350) diminue une distance entre la plaque de déformation et la périphérie (62) du corps (61).

4. Boîtier d'antenne (60) selon la revendication 3,
dans lequel le positionneur de plaque de déformation (122, 651) comprend une pluralité de vis (122, 651), conçues pour être vissées manuellement dans le corps (61), de manière à diminuer la distance entre la plaque de déformation et la périphérie (62) du corps (61), ou
dans lequel le positionneur de plaque de déformation comprend une pluralité de rivets, conçus pour diminuer la distance entre la plaque de déformation et la périphérie (62) du corps (61) quand ils sont rivés, ou
dans lequel le positionneur de plaque de déformation comprend un moteur, en particulier un servomoteur, conçu pour positionner la plaque de déformation, de manière à régler la distance entre la plaque de déformation et la périphérie (62) du corps (61).

5. Boîtier d'antenne (60) selon l'une quelconque des revendications 1 à 4,
dans lequel l'élément d'étanchéité élastique (66, 126, 131, 141, 151, 161, 171, 181, 191) comprend un élément cylindrique (66, 126, 131, 141, 151) ou tubulaire élastique, en particulier un joint torique, ou une lèvre d'étanchéité (161, 171, 181, 191) disposée autour de la périphérie (62) du corps (61).

6. Boîtier d'antenne (60) selon la revendication 5,
dans lequel l'élément d'étanchéité élastique (66, 126, 131, 141, 151, 161, 171, 181, 191) comprend au moins un ressort (132, 152, 172, 193) disposé entre l'élément cylindrique (131, 151) ou tubulaire élastique ou la lèvre d'étanchéité (171, 191) et le corps (61), et
dans lequel au moins un ressort (132, 152, 172, 193) est conçu pour maintenir élastiquement l'élément cylindrique (131, 151) ou tubulaire élastique ou la lèvre d'étanchéité (171, 191) par rapport au corps (61).

7. Boîtier d'antenne (60) selon l'une quelconque des revendications 1 à 6,
dans lequel la feuille de couverture (63) a une épaisseur comprise entre 0,05 mm et 0,5 mm, de préférence égale à 0,3 mm, et/ou
dans lequel la feuille de couverture (63) a une εᵣ inférieure à 5, de préférence inférieure à 3,5, et/ou
dans lequel la feuille de couverture (63) consiste en un film plastique, de préférence en un film plastique composite.

8. Boîtier d'antenne (60) selon l'une quelconque des revendications 1 à 7,
dans lequel, quand la feuille de couverture (63) s'étire en raison d'une dilatation thermique ou d'une dilatation due au vieillissement, l'élément d'étanchéité élastique (66, 126, 131, 141, 151, 161, 171, 181, 191) est conçu pour maintenir la tension de la feuille de couverture (63) sur l'ouverture par déformation élastique, et dans lequel, quand la feuille de couverture (63) se contracte en raison d'un retrait thermique ou d'un retrait dû au vieillissement, l'élément d'étanchéité élastique (66, 126, 131, 141, 151, 161, 171, 181, 191) est conçu pour maintenir la tension de la feuille de couverture (63) sur l'ouverture par déformation élastique.

9. Boîtier d'antenne (60) selon l'une quelconque des revendications 1 à 8,
dans lequel l'élément de tension non élastique (65, 120) et l'élément d'étanchéité élastique (66, 126, 131, 141, 151, 161, 171, 181, 191) sont disposés sur un côté de la périphérie (62) du corps (61), orientés en regard de la direction de rayonnement principale de l'antenne.

10. Boîtier d'antenne (60) selon l'une quelconque des revendications 1 à 8,
dans lequel l'élément de tension non élastique (65, 120) est disposé sur un côté de la périphérie (62) du corps (61), orienté radialement vers l'extérieur par rapport à la direction de rayonnement principale de l'antenne,
dans lequel l'élément d'étanchéité élastique (66, 126, 131, 141, 151, 161, 171, 181, 191) est disposé sur un côté de la périphérie (62) du corps (61), orienté en regard de la direction de rayonnement principale de l'antenne, et
dans lequel un élément de déviation (142, 152) est disposé entre l'élément de tension non élastique (65, 120) et l'élément d'étanchéité élastique (66, 126, 131, 141, 151, 161, 171, 181, 191), conçu pour guider la feuille de couverture (63) autour d'un coin de la périphérie (62) du corps (61).

11. Boîtier d'antenne (60) selon l'une quelconque des revendications 1 à 8,
dans lequel l'élément de tension non élastique (65, 120) et l'élément d'étanchéité élastique (66, 126, 131, 141, 151, 161, 171, 181, 191) sont disposés sur un côté de la périphérie (62) du corps (61), orientés radialement vers l'extérieur par rapport à la direction de rayonnement principale de l'antenne, et
dans lequel un élément de déviation (160, 170, 182, 192) est disposé entre l'élément d'étanchéité élastique (66, 126, 131, 141, 151, 161, 171, 181, 191) et l'ouverture du corps (61) couverte par la feuille de couverture (63), et conçu pour guider la feuille de couverture (63) autour d'un coin de la périphérie (62) du corps (61).

12. Boîtier d'antenne (60) selon l'une quelconque des revendications 1 à 11,
dans lequel le boîtier d'antenne (60) comprend un élément de fixation d'antenne conçu pour fixer l'antenne, de sorte que la direction de rayonnement principale de l'antenne soit dirigée vers l'ouverture du corps (61).

13. Agencement d'antenne (69) comprenant un boîtier d'antenne (60) selon l'une quelconque des revendications 1 à 12, et une antenne, de préférence une antenne en réseau phasé,
l'antenne étant disposée dans le boîtier d'antenne (60).

14. Agencement d'antenne (69) selon la revendication 13,
dans lequel une surface de l'antenne est disposée parallèlement à la feuille de couverture (63).
